# EUROPEAN PATENT APPLICATION

(11) **EP 2 757 446 A2**
(43) Date of publication of application: **23.07.2014**
(21) Application number: 13175886.4
(22) Date of filing: 10.07.2013
(51) Int. Cl.: G06F 3/044

(54) **Metal electrode, touch electrode layer, color filter substrate and display panel**

(30) Priority: 18.01.2013 CN 201310018506
(71) Applicant: Shanghai Tianma Micro-electronics Co., Ltd., Pudong New District Shanghai 201201 (CN)
(72) Inventor: Yao, Qijun, 201201 Shanghai (CN); Ma, Jun, 201201 Shanghai (CN)
(74) Representative: Dantz, Jan Henning

(57) **Abstract**

A display panel includes a color filter substrate and an array substrate. The color filter substrate includes a transparent substrate and a touch electrode layer. The touch electrode layer includes a sensing electrode and a driving electrode disposed on opposite sides of the transparent substrate. The sensing electrode includes a plurality of striped sub-electrodes having random shapes and disposed along a first direction and spaced apart from each other in a second direction by a spacing. The first direction is perpendicular to the second direction. Each of the sub-electrodes has a width of about 3 micrometers and a resistance value that varies within 25 percent of a predetermined resistance value. The sensing electrode has a width of 4 to 5 millimeters.

## Description

### FIELD OF THE INVENTION

The present invention relates to touch screens, and more particularly, to a metal electrode, a touch electrode layer, a color filter substrate, and a display panel.

### BACKGROUND OF THE INVENTION

In recent years, in-cell touch screens have been used in various electronic applications such as mobile phones, GPS navigation systems, tablets thanks to their light weight and ease of operation. For example, a touch screen can be operated with a user's finger, a pen, a stylus, or a like tool.

A capacitive in-cell touch screen may be formed from a matrix of touch drive and sense lines made of transparent conductive materials such as indium tinoxide (ITO). The touch drive and touch sense lines are arranged in rows and columns on a transparent substrate. When a user's finger approaches or touches the touch screen, a capacitance between the touch drive and touch sense line may change. This change in capacitance indicates that a touch is occurring at this location.

### BRIEF SUMMARY OF THE INVENTION

Embodiments of the invention provide a metal electrode, a touch electrode layer, a color filter substrate, and a display panel that has the characteristics of better viewing effects and improved sensitivity and accuracy of touch detection.

In an embodiment, a metal electrode comprises a plurality of striped sub-electrodes which have random shapes arranged in a first direction and spaced apart from each other by a spacing in a second direction.

An embodiment of the present invention provides a touch electrode layer comprising a driving electrode and a sensing electrode made by the metal electrode as described above.

An embodiment of the present invention provides a color filter substrate comprising a transparent substrate and a touch electrode layer described above. The driving electrode and the sensing electrode of the touch electrode layer are disposed on opposite sides of the transparent substrate.

An embodiment of the present invention provides a display panel comprising the color filter substrate as described above and an array substrate separated from the color filter substrate.

### BRIEF DESCRIPTION OF THE DRAWINGS

Embodiments of the present invention will be described below in conjunction with the drawings, in which:

Fig. 1 is a perspective view of an in-cell touch screen according to the related art;

Fig. 2 is a top view of a metal electrode according to an embodiment of the present invention;

Fig. 3 is a cross-sectional view of a touch electrode layer according to an embodiment of the present invention;

Fig. 4A is a side view of a structure formed by a sensing electrode and a driving electrode according to the related art;

Fig. 4B is a side view of a structure formed by striped sub-electrodes and a driving electrode according to an embodiment of the present invention;

Fig. 5 is a perspective view of a color filter substrate according to an embodiment of the present invention;

Fig. 6 is a cross-sectional view of a color filter substrate according to an embodiment of the present invention;

Fig. 7 is a perspective view of a display panel according to an embodiment of the present invention; and

Fig. 8 is a perspective view of a display panel according to an embodiment of the present invention.

### DETAILED DESCRIPTION OF THE INVENTION

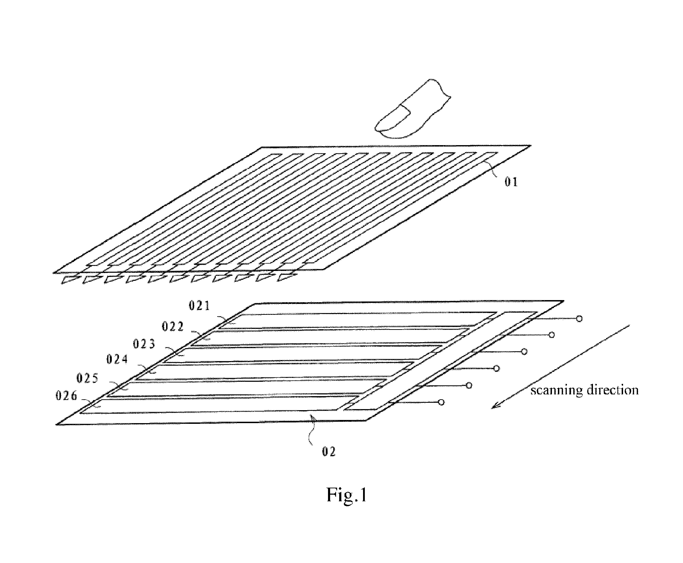

Figure 1 shows a perspective view of a touch electrode of an in-cell touch screen 100 according to the related art. As shown, touch screen 100 includes a multitude of sub-electrodes (sensing lines) 01. There are slits between sub-electrodes 01 that are shown as striped patterns interposed between the sub-electrodes. Sub-electrodes 01 are disposed on one side of a color filter (CF) glass substrate in a first direction. Touch screen also has a driving electrode 02 that is disposed on a thin film transistor (TFT) glass substrate. As shown, driving electrode 02 may have six sub-electrodes 021 (driving lines) through 026 that have a striped pattern and are disposed in a second direction that is substantially perpendicular to the first direction.

Because of the ITO material used for the sensing sub-electrodes, the resistance of the sensing sub-electrodes is relatively high, and when the sensing sub-electrodes are formed as a film on a side of the CF glass substrate that faces away from the TFT glass, the process temperature is restricted, which aggravates the high resistance problem of the sensing sub-electrodes. Moreover, resistance-capacitance effects due to high impedance result in signal distortion, so that it may be difficult to detect a touch event on the touch screen. Conventional touch screens thus have poor reliability and poor touch sensitivity.

One way to reduce the resistance of the sensing sub-electrodes made of ITO material is to make the sensing sub-electrodes relatively wide. However, a relatively wide sensing sub-electrode might shield electric field lines of the driving sub-electrode so that only few electric field lines can go through the sensing sub-electrodes to assist in the change of capacitance when an object is approaching or touching the touch screen. Therefore, lowering the resistance of the sensing sub-electrodes would not increase the sensitivity and reliability of the touch screen.

In addition, as the sensing sub-electrodes have a patterned structure, moiré effects might be produced in display, resulting in undesirable moiré pattern visible to a user.

Embodiments of the present invention will be described below. These embodiments are only examples which should not unduly limit the scope of the invention. Moreover, in an effort to provide a concise description of these embodiments, all features of an embodiment may not be described in the specification. Additionally, without conflict, these embodiments in the present invention and the features in the embodiments can be combined with each other.

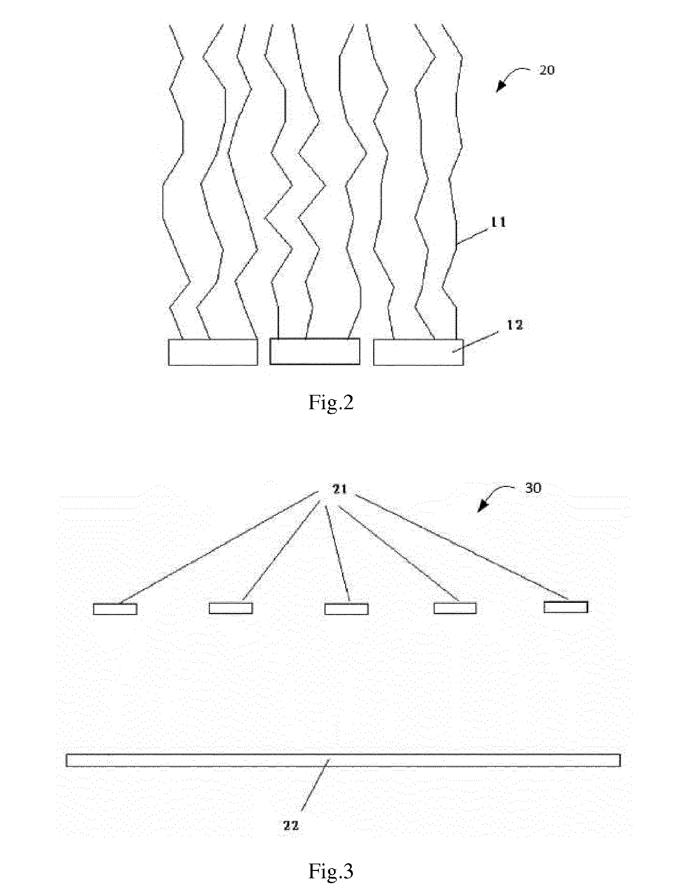

Fig. 2 shows a metal electrode 20 according to an embodiment of the present invention. Metal electrode 20 may include a plurality of striped sub-electrodes 11having random shapes. The random shapes herein mean that in the macroscopic view, the striped sub-electrodes 11 extend along a first direction, while curving or bending at random patterns in a second direction. The bending range and direction of any one of the striped sub-electrodes 11 can be the same or different from each other. In other words, in the macroscopic view, there is no unitary bending extension rule, and the striped sub-electrodes 11 may thus randomly take on any shapes within a predetermined range.

It should be noted that the stripe described herein means that, in the macroscopic view, the sub-electrodes 11 extend along the same direction and are striped-shaped as a whole, that the projections of sub-electrodes 11 in the light transmitting direction are not rectangular stripes as in the conventional art. In other words, the projections of the striped sub-electrodes, in accordance with the invention, have random shapes in the light transmitting direction. In a preferred embodiment, the profiles of the striped sub-electrodes 11 are formed by etching along the crack traces that naturally exist in the metal with some randomness.

Referring to Fig. 2, the sub-electrodes 11 have random bends along the same direction (the bends are shown as deviations of the stripes along the vertical direction as shown in Fig. 2). The striped sub-electrodes are spaced apart from each other by a distance (or spacing). The spacing between two adjacent sub-electrodes 11 can be restricted in a design, so that the distance in the horizontal direction (as shown in Fig. 2) between two adjacent striped sub-electrodes11 can have a minimal value and a maximal value. In an embodiment, the distance between two adjacent striped sub-electrodes 11 is ranging between 2 micrometers and 200 micrometers.

In an embodiment, the metal electrode can be used as a sensing electrode. The sensing electrode is used in a display panel with the touch screen to detect a touch signal. The display panel can comprise a plurality of sub-pixel regions, and in an embodiment, only one sensing electrode is disposed in a sub-pixel region to reduce the shading area associated with the sensing electrode.

Because the resistance of metal is significantly lower than that of the ITO material and the metal electrode is not affected by process temperature restriction associated with the process of forming the ITO film, the metal sensing electrode does not need to have a wide width to reduce the resistance as is in the case of conventional electrodes made of ITO, the metal electrode thus improves the accuracy and sensitivity of touch detection. Moreover, a metal electrode does not require additional specialized processes of forming slits having periodic patterns as required by sensing electrodes that are fabricated using ITO. The metal electrode according to embodiments of the invention only requires slits along the random crack traces naturally formed in the metal, thus simplifying the fabrication process of the sensing electrode.

Still referring to Fig. 2, each striped sub-electrode 11 has a random shape. In contrast, the conventional sensing electrode has a periodic structure that, when used in a touch screen may produce moiré effects, whereas the metal electrode (used as the sensing electrode) in a touch screen does not have the moiré effects thanks to the random arrangement of the striped sub-electrodes and can thus improve the definition and accuracy of a display.

In an embodiment, the width of different positions of each of the striped sub-electrodes 11 can be the same or different at different locations along the first direction (vertical direction in Fig. 2). Ina specific embodiment, the width of each of the striped sub-electrodes 11 is the same at any location. For example, the width of each of the striped sub-electrodes 11 is at least 1 micrometer and at most 5 micrometers, or more preferably, the width of each of the striped sub-electrodes 11 is 3 micrometers.

In an embodiment, the metal electrode has a width in a range between 4 millimeters and 5 millimeters. The width of the metal electrode is defined as the sum of all distances between the sub-electrodes.

As the width of each of the striped sub-electrodes 11 is relatively small, when the metal electrode is used as the sensing electrode, the existence of the natural slits between the striped sub-electrodes 11 cannot be discerned macroscopically, so that the slits won't affect the display, whereas the slits in a conventional electrode formed by ITO are visible to naked eyes, and thus affect the display or viewing quality of the touch screen. Furthermore, because the width of the metal electrode is relatively small, the area occupied by the metal electrode can also be reduced.

In an embodiment, the metal electrode further comprises one or more blocks 12 that connect the striped sub-electrodes 11 at one end. As shown in Fig. 2, each of the blocks 12 may connect to a multitude of the striped sub-electrodes 11, thus forming a plurality of metal electrodes. In an embodiment, one block 12 can connect one hundred or more of striped sub-electrodes 11. In an embodiment, the striped sub-electrodes 11 are coupled to blocks 12 at a random bending position. In other words, the striped sub-electrodes may have different coupling angles at the intersection with blocks 12.

In an embodiment, the resistance value of each striped sub-electrode 11 can be set to a predetermined resistance value, which can be defined according to a specific requirement. In an embodiment, the resistance value of each striped sub-electrode 11 can vary within a range of ± 25% of the predetermined resistance value, so that the resistance values of the striped sub-electrodes 11 are within a predetermined value range.

In an embodiment, the metal electrode can be made of a low-reflection metal material. The low-reflection metal electrode material preferably can be chromium, oxygen-doped molybdenum, or other low-reflection metal materials. Thus, during display of the touch screen comprising the metal electrode (used as the sensing electrode), the effects of reflected light can be reduced, and the display effect can be optimized.

Fig. 3 is a cross-sectional view of a touch electrode layer30 according to an embodiment of the present invention. Touch electrode layer 30 includes a sensing electrode 21. Sensing electrode 21 includes a plurality of striped sub-electrodes having random shapes as described above in Fig. 2. Touch panel 30 also includes a driving electrode 22 disposed in a direction perpendicular to sensing electrode 21.

In an embodiment, the driving electrode 22 may include one or more driving sub-electrodes that can be made of indium tin oxide or indium zinc oxide. Moreover, the driving sub-electrodes and the sensing sub-electrodes are arranged perpendicular to each other, that is, each driving sub-electrode is perpendicular to each sensing sub-electrodes.

As described above, the resistance value of the sensing electrode 21 is sufficiently small due to the use of a metal, and the width of each striped sub-electrode in the sensing electrode 21 can be relatively small with regard to the conventional sensing electrode, loss of signals in transmission can be effectively reduced, and the accuracy of touch detection is significantly improved.

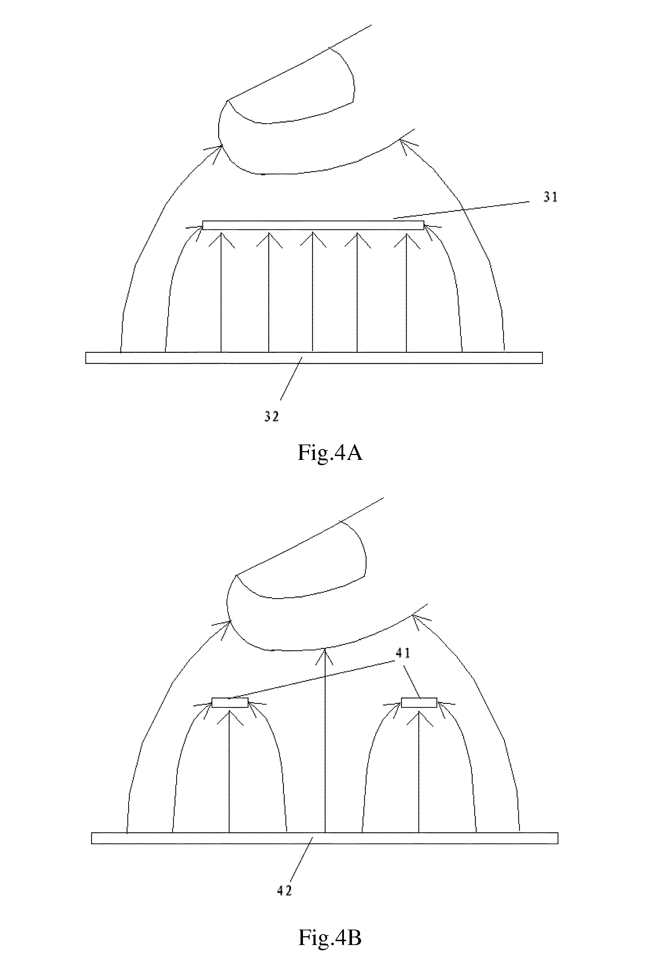

A specific example will be described below. In the touch electrode layer provided by the related art, the side view of the structure formed by the sensing electrode 31 and the driving electrode 32 is shown in Fig. 4A. In the touch electrode layer provided by an embodiment of the invention, provided that in a region with the same area as the sensing electrode in the related art, there can be included two striped sub-electrodes 41, the side view of the structure formed by the two striped sub-electrodes 41 and the driving electrode 42 is shown in Fig. 4B.

Through inspection and comparison of Fig. 4A and Fig. 4B, it can be seen when a finger touches the structure shown in Fig. 4B, more electric field lines can be absorbed away through gaps between adjacent striped sub-electrodes 41. Therefore, the change amount of the mutual capacitance formed between the sensing electrode and the driving electrode in the touch electrode layer provided by the embodiment caused by the finger is greater than that between the sensing electrode and the driving electrode in the touch electrode layer provided by the related art caused by the finger. This shows that the accuracy of touch detection can be significantly improved by adopting the touch electrode layer provided by the embodiment.

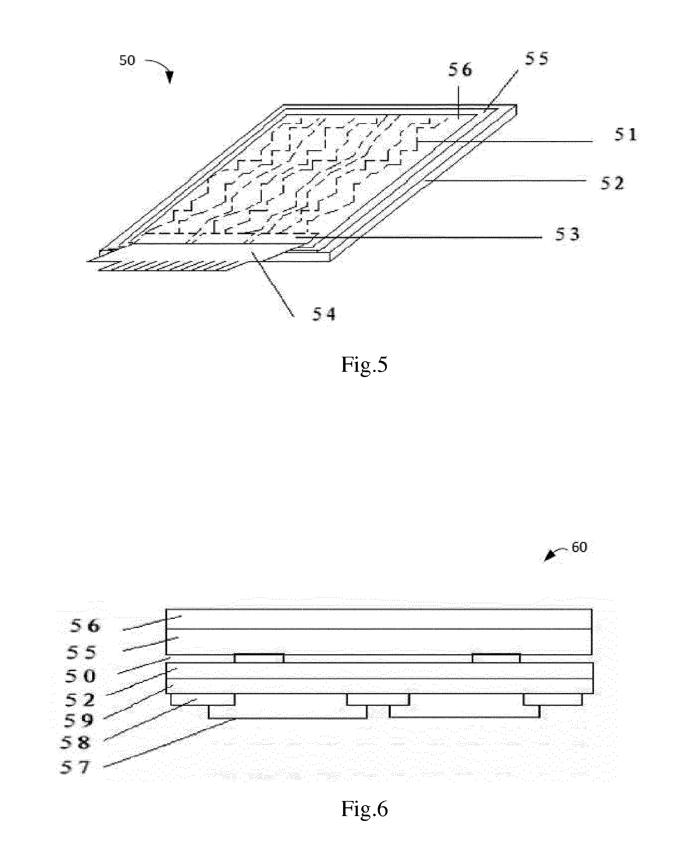

Fig. 5 shows a perspective view of a color filter substrate 50according to an embodiment of the present invention. Color filter substrate 50 includes a transparent substrate 52 and a touch electrode layer as described in above sections and Fig. 3. The touch electrode layer comprises a sensing electrode and a driving electrode. The sensing electrode comprises a plurality of striped sub-electrodes, and each of the sub-electrodes has a random shape. In the embodiment, the sensing electrode and the driving electrode are disposed on opposite sides of the transparent substrate 52.

In an embodiment, the sensing electrode of the touch electrode layer can comprise a plurality of striped sub-electrodes 51, and a plurality of blocks 53 each for connecting a portion of the striped sub-electrodes 51. Moreover, in another embodiment, blocks 53 can also be connected with a flexible printed circuit (FPC) 54, so as to ensure the reliability of signal transmission when the color filter substrate is subsequently connected with other components to satisfy the requirement of miniaturization and high density of component assembly. It is noted that the driving electrode of the touch electrode layer is not shown in Fig. 5. It can be understood that the driving electrode of the touch electrode layer is at the other side of the transparent substrate 52, away from the sensing electrode.

Fig. 6 shows a cross-sectional view of a color filter substrate 60 according to an embodiment of the present invention. Color filter substrate 60 comprises a sensing electrode 50 that may have a plurality of striped sub-electrodes disposed on one side of a transparent substrate 52, and a driving electrode 59 disposed on another side of the transparent substrate 52. Color filter substrate 60 further comprises a quarter-wave plate 55 over the sensing electrode 50, so that the sensing electrode 50 is located between the transparent substrate 52 and the quarter-wave plate 55. Through adding the quarter-wave plate 55 to the sensing electrode 50, when the in-cell touch screen comprising the touch electrode layer is used for viewing by a user, the influence by reflected light can be reduced, and the viewing effect will be optimized.

In an embodiment, the color filter substrate further comprises a polarizer 56, and the polarizer 56 is located on a side of the quarter-wave plate 55 away from the sensing electrode 50 to ensure polarization of incident light rays.

In an embodiment, the color filter substrate further comprises a color filter layer 57, and the driving electrode 59 is located between the transparent substrate 52 and the color filter layer 57, so that a white light source can be filtered into red light, green light, blue light and the like through the color filter layer 57.

In an embodiment, the color filter substrate further comprises a black matrix 58, and the black matrix 58 is located on the side of the color filter layer 57. The black matrix can be disposed facing the driving electrode 59 or away from it. In an embodiment, the black matrix 58 is disposed on the side of the color filter layer 57 and facing the driving electrode 59, as shown in Fig. 6. Black matrix 58 reduces light leakage and improves contrast.

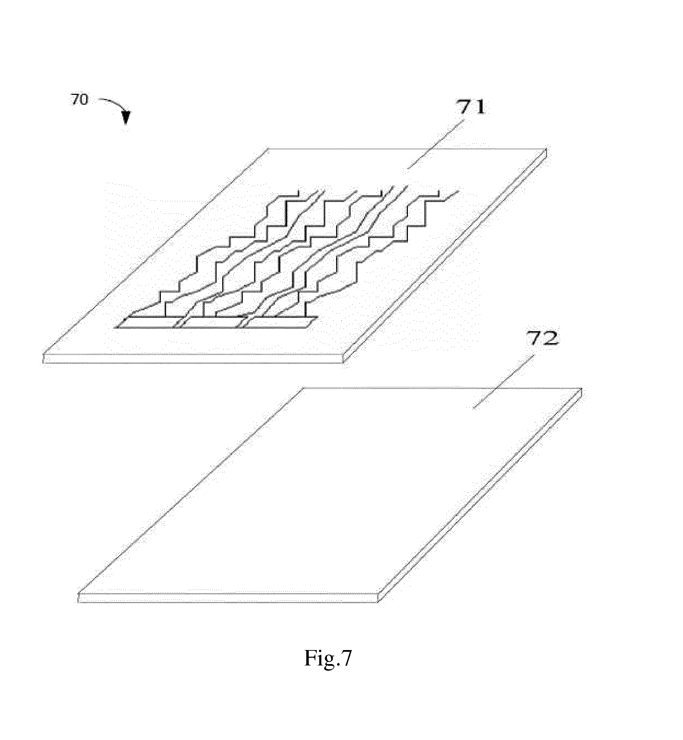

Fig. 7 shows a perspective view of a display panel 70 according to an embodiment of the present invention. Display panel 70 comprises a color filter substrate 71 that can be the type described in above sections in conjunction with Figs. 5 and 6, and an array substrate 72 facing the backside of the color filter substrate 71, as shown in Fig. 7.

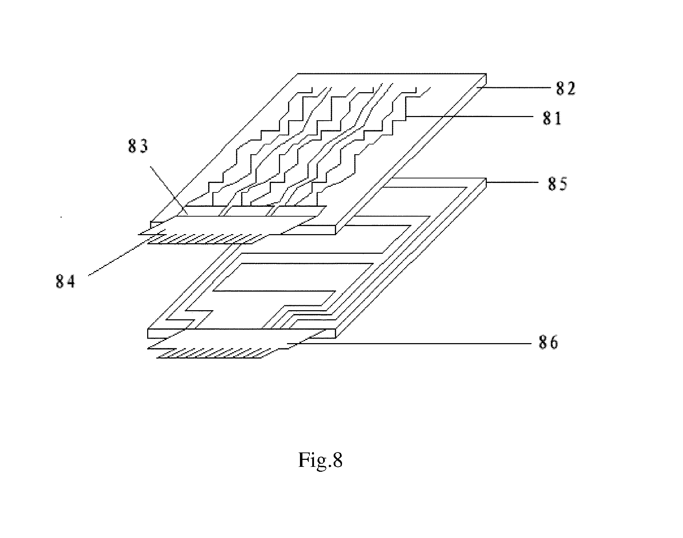

Display panel 70 will be described in conjunction with Fig. 8. In an embodiment, the color filter substrate 71 comprises a first transparent substrate 82 and a touch electrode layer comprising a driving electrode and a sensing electrode respectively located on opposite sides of the first transparent substrate 82. In an embodiment, the sensing electrode comprises a plurality of striped sub-electrodes 81 and a plurality of blocks 83; and each of the blocks 83 connects a portion of the striped sub-electrodes 81. In the embodiment, the sensing electrode is located on one side of the first transparent substrate 82, and facing away from the array substrate 72. In an embodiment, the color filter substrate 71 further comprises a first flexible circuit board 84 for receiving signals from the sensing electrode.

In an embodiment, the array substrate 72 can be a thin film field effect transistor (TFT) array substrate. In an embodiment, the array substrate 72 further comprises a second transparent substrate 85, and a TFT array formed on the surface of the second transparent substrate 85, facing the color filter substrate 71.In another embodiment, the array substrate 72 can further comprise a second flexible circuit board 86 for inputting signals to the array substrate 72.

In an embodiment, the first transparent substrate 82 and the second transparent substrate 85 can both be glass substrates.

In an embodiment, the sensing electrode and the driving electrode in the touch electrode layer can be respectively disposed on opposite sides of the first transparent substrate 82. In an embodiment, the sensing electrode is disposed on the side of the first transparent substrate 82 facing away from the second transparent substrate 85, and the driving electrode is disposed on the other side of the first transparent substrate 82. In another embodiment, the sensing electrode is disposed on one side of the first transparent substrate 82, and the driving electrode is disposed on a side of the second transparent substrate 85 facing the first transparent substrate 82, as shown in Fig. 8.

In an embodiment, the display panel can further comprise a liquid crystal layer positioned between the color filter substrate and the array substrate to display an image.

Embodiments of the present invention provide many advantages and benefits. For example, the novel metal electrode can be utilized as the sensing electrode that provide superior properties as reducing the resistance of the sensing electrode, improving the sensitivity of touch detection, and increasing the definition and accuracy of display. As each striped sub-electrode in the metal electrode can be designed to be relatively small in width, macroscopic invisibility of the striped sub-electrodes can be realized, and further, only one striped sub-electrode can be arranged in a sub-pixel region, so as to reduce the shading area, and optimize the display and viewing effects. Moreover, through the use of a low-reflection metal material for the novel metal electrode, or through the use of a quarter-wave plate for covering the metal, the effects of reflected or stray light can be effectively reduced, and optimized display and viewing effects can be achieved.

Embodiments of the present invention also include a touch electrode layer having the metal electrode as described in detail in above section, a color filter substrate having the touch electrode layer, and a display panel having the color filter substrate. Although preferred embodiments of the invention are described, those skilled in the art can make additional alterations and modifications to those embodiments. It is to be understood that the above described embodiments are intended to illustrate rather than limit the invention.

Various modifications and variations of the present invention can be made by those skilled in the art without departing from the spirit and scope of the application. Thus the invention is also intended to encompass those modifications and variations thereto so long as those modifications and variations come into the scope of the claims of the invention and their equivalents.

## Claims

1. A metal electrode, comprising a plurality of striped sub-electrodes having random shapes disposed along a first direction and spaced apart from each other in a second direction by a spacing..

2. The metal electrode according to claim 1, wherein the metal electrode is a sensing electrode.

3. The metal electrode according to claim 1, wherein each of the striped sub-electrodes has a width ranging from 1 micrometer to 5 micrometers.

4. The metal electrode according to claim 3, wherein the width is 3 micrometers.

5. The metal electrode according to claim 1, wherein the metal electrode has a width in a range between 4 millimeters and 5 millimeters.

6. The metal electrode according to claim 1, wherein the spacing is ranging from 2 micrometers to 200 micrometers.

7. The metal electrode according to claim 1, further comprising:
one or more blocks, wherein one end of the striped sub-electrodes is coupled to the one or more blocks at a bending position.

8. The metal electrode according to claim 1, wherein the metal electrode is made of a low-reflection metal material.

9. A touch electrode layer comprising:
a driving electrode disposed in a first direction; and
a sensing electrode having a plurality of striped sub-electrodes disposed in a second direction, the striped sub-electrodes having random shapes.

10. A color filter substrate comprising:
a transparent substrate having a first side and a second side; and
a touch electrode layer comprising:
a sensing electrode disposed on the first side of the transparent substrate, the sensing electrode comprising a plurality of striped sub-electrodes having random shapes; and
a driving electrode disposed on the second side of the transparent substrate.

11. The color filter substrate according to claim 10, further comprising a quarter-wave plate, and the sensing electrode is disposed between the transparent substrate and the quarter-wave plate.

12. The color filter substrate according to claim 11, further comprising a polarizer disposed on a side of the quarter-wave plate facing away from the sensing electrode.

13. The color filter substrate according to claim 10, further comprising a color filter layer, wherein the driving electrode is disposed between the transparent substrate and the color filter layer.

14. The color filter substrate according to claim 13, further comprising a black matrix disposed on a side of the color filter layer facing to the driving electrode or away from the driving electrode.

15. A display panel, comprising the color filter substrate according to any one of claims 10-14, and an array substrate separated from the color filter substrate.
